Europäisches Patentamt

European Patent Office

Office européen des brevets

(11) Veröffentlichungsnummer: **0 378 709**

**A1**

(12) **EUROPÄISCHE PATENTANMELDUNG**

(21) Anmeldenummer: 88121367.2

(22) Anmeldetag: 21.12.88

(51) Int. Cl.5: **C09G 1/16, C11D 3/18,**
**C11D 3/37**

(43) Veröffentlichungstag der Anmeldung:
25.07.90 Patentblatt 90/30

(84) Benannte Vertragsstaaten:
. AT BE CH DE ES FR GB GR IT LI LU NL SE

(71) Anmelder: **ZOIG CHEMIE GmbH**
**Glogauerstrasse 6**
**D-8000 München 50(DE)**

Anmelder: **Höfer, Klaus**
**Luisenthaler Strasse 196**
**D-6600 Saarbrücken(DE)**

(72) Erfinder: **Gartner, Peter**
**Im Fuchsberg 3**
**D-7573 Sinzheim(DE)**
Erfinder: **Höfer, Klaus**
**Luisenthaler Strasse 196**
**D-6600 Saarbrücken(DE)**

(74) Vertreter: **Behrendt, Thomas**
**Rechtsanwalt, Thierschplatz 4**
**D-8000 München 22(DE)**

(54) **Reinigungs-, Polier- und Schutzmittel für Lacke, Glas, Kunststoffe, Chrom und Gummi an Karosserien.**

(57) Die Erfindung betrifft ein Reinigungs-, Polier- und Schutzmittel für Lacke, Glas, Kunststoffe, Chrom und Gummi an Karosserien von Fahrzeugen, Flugzeugen sowie Schiffen und Booten. Ferner betrifft die Erfindung ein Verfahren zur Anwendung dieses Mittels. Das Mittel ist gekennzeichnet durch folgende Zusammensetzung:

EP 0 378 709 A1

| | | | |
|---|---|---|---|
| 5,00 % | bis | 25,00 % | paraffinische und/oder naphtenische Kohlenwasserstoffe, insbesondere Petroleum, entaromatisiert, |
| 0,50 % | bis | 5,00 % | Aniontensid, insbesondere eines gesättigten, natürlichen oder synthetischen $C_{12}C_{14}$-Fettalkohols, |
| 0,20 % | bis | 1,00 % | Emulgator, insbesondere eines nichtionischen Triethanolamin-Monoölsäureester, |
| 0,005 % | bis | 0,01 % | Konservierungsmittel, insbesondere eines Chlormethyl-Methylisothiazolon, |
| 0,004 % | bis | 0,01 % | Stabilisator in Form einer organischen Säure, insbesondere Äthansäure, |
| 0,50 % | bis | 3,00 % | Siliconöl, insbesondere Aminopolysiloxan, gelöst in Testbenzin und Isopropanol, |
| 0,50 % | bis | 15,00 % | Isopropanol, |
| Rest auf Einhundert demineralisiertes Wasser. | | | |

## Reinigungs-, Polier- und Schutzmittel für Lacke, Glas, Kunststoffe, Chrom und Gummi an Karosserien

Die Erfindung betrifft ein Reinigungs-, Polier- und Schutzmittel für Lacke, Glas, Kunststoffe, Chrom und Gummi an Karosserien von Fahrzeugen, Flugzeugen sowie Schiffen und Booten.

Es ist bei der Herstellung von Kraftfahrzeugen allgemein üblich, die außen lackierten Teile nach der Endfertigung nochmals einer Sichtkontrolle zu unterziehen. Aus dieser Kontrolle ergibt sich, daß mitunter kleinste Einschlüsse und Unebenheiten im Lack bzw. auf der Außenfläche sichtbar sind, die wegpoliert werden müssen. Dieser Vorgang erfolgt mittels Auftragen einer pastösen Politur und anschließendem Polieren der in Frage kommenden Stellen auf dem Lack. Nach Beendigung des Poliervorganges wird die zu bearbeitende Fläche mit Testbenzin abgewaschen.

Anschließend wird das Fahrzeug konserviert, d. h. es wird im Heiß- oder Kaltverfahren eine gleichmäßige, dünne Paraffinschicht auf die Außenhaut des Fahrzeuges aufge tragen, um witterungsbedingte und mechanische Einflüsse zu vermeiden.

Die so behandelten Fahrzeuge werden beim Empfänger entkonserviert, d. h. einer Deparaffinierung unterzogen, indem man mittels Dampfstrahler und/oder Lösungsmitteln die Paraffinschicht mechanisch entfernt. Anschließend wird das Fahrzeug getrocknet.

Es hat sich nun gezeigt, daß die im Automobilwerk behandelten Flächen bzw. die manuell auspolierten Stellen nach der Deparaffinierung in Form eines Schattenumrisses wieder sichtbar werden, d. h. daß sich die vorher polierten Stellen nach der Entkonservierung und Trocknung nicht mehr dem ursprünglichen Glanzfilm anpassen, zumal durch das Entfernen des Polierfilms mit Testbenzin die Lackschicht in ihrer Konsistenz angelöst wird.

Der vorliegenden Erfindung liegt die Aufgabe zugrunde, ein Mittel der eingangs genannten Art zu schaffen, welches, auf die behandelte Fläche aufgetragen, die ursprüngliche Konsistenz des Autolackes erhält bzw. wieder herstellt. Außerdem soll das Mittel eine Reinigungs- und Polierfunktion zu der genannten Schutzfunktion besitzen, die Wachskonservierung überflüssig macht.

Zur Lösung der gestellten Aufgabe wird ein Reinigungs-, Polier- und Schutzmittel für Lacke, Glas, Kunststoffe, Chrom und Gummi an Karosserien von Fahrzeugen, Flugzeugen sowie Schiffen und Booten vorgeschlagen, welches gekennzeichnet ist durch folgende Zusammensetzung:

```
5,00 %   bis   25,00 %   paraffinische und/oder naphteni-
                         sche Kohlenwasserstoffe, insbeson-
                         dere Petroleum, entaromatisiert,
0,50 %   bis    5,00 %   Aniontensid, insbesondere eines
```

3

gesättigten, natürlichen oder synthetischen $C_{12}C_{14}$-Fett-alkohols,

0,20 %   bis   1,00 %   Emulgator, insbesondere eines nichtionischen Triethanolamin-Monoölsäureester,

0,005 %   bis   0,01 %   Konservierungsmittel, insbesondere eines Chlormethyl-Methylisothiazolon,

0,004 %   bis   0,01 %   Stabilisator in Form einer organischen Säure, insbesondere Äthansäure,

0,50 %   bis   3,00 %   Siliconöl, insbesondere Amino-polysiloxan, gelöst in Test-benzin und Isopropanol,

0,50 %   bis   15,00 %   Isopropanol,

Rest auf Einhundert demineralisiertes Wasser.

Gemäß Anspruch 2 weist das Mittel gemäß der Erfindung in einem bevorzugten Ausführungsbeispiel folgende Zusammensetzung auf:

| | | | |
|---|---|---|---|
| 5,00 % | bis | 25,00 % | Paraffinische und/oder naphtenische Kohlenwasserstoffe, insbesondere Petroleum, entaromatisiert, |
| 0,50 % | bis | 5,00 % | Aniontensid, insbesondere eines gesättigten, natürlichen oder synthetischen $C_{12}C_{14}$-Fettalkohols, |
| 0,10 % | bis | 2,00 % | Lösungsvermittler, insbesondere Methylamylenglykol, |
| 0,20 % | bis | 1,00 % | Emulgator, insbesondere eines Triethanolamin-Monoölsäureester, |
| 0,005 % | bis | 0,01 % | Konservierungsmittel, insbesondere eines Chlormethyl-Methylisothiazolon, |
| 0,50 % | bis | 15,00 % | Isopropanol, |
| Rest auf Einhundert demineralisiertes Wasser. | | | |

Das im Anspruch 2 beschriebene Mittel weist keinen Stabilisator und kein Siliconöl auf. Diese Mittel können entfallen, wenn keine Langzeitkonservierung gewünscht wird.

Das nach Anspruch 3 hergestellte Mittel gemäß der Erfindung weist anstelle des Aniontensids ein Kationtensid auf, so daß sich folgende Zusammensetzung ergibt:

| 0,50 % | bis | 2,00 % | Kationtensid, insbesondere ein quaternäres Fettamin, |
|---|---|---|---|
| 5,00 % | bis | 25,00 % | paraffinische und/oder naphtenische Kohlenwasserstoffe, insbesondere Petroleum, entaromatisiert, |
| 0,50 % | bis | 1,00 % | Äthansäure oder eine andere organische Säure, |
| 0,05 % | bis | 3,00 % | Siliconöl, insbesondere Aminopolysiloxan, gelöst in Testbenzin und Isopropanol, |
| 0,10 % | bis | 1,00 % | Emulgator, insbesondere eines Lauryl-/Myristylalkohol-Ethylenoxid-Addukt, |
| 0,005 % | bis | 0,01 % | Konservierungsmittel, insbesondere eines Chlormethyl-Methylisothiazolon, |
| 0,10 % | bis | 0,50 % | Antistatikum, insbesondere eines Kokospentaethoxymethylammoniummethosulfat, |
| 0,50 % | bis | 15,00 % | Isopropanol, |
| Rest auf Einhundert demineralisiertes Wasser. | | | |

Gemäß Anspruch 4 besteht das Verfahren zur Anwendung des Mittels darin, daß entweder manuell oder maschinell das Mittel auf die gesamte Oberfläche der Karosserie des Fahrzeuges aufgetragen bzw. aufgedüst und anschließend wiederum manuell oder maschinell trockenpoliert wird.

Nach diesem Vorgang kann ein Konservierungsmittel wie beispielsweise Paraffin, aufgetragen werden. Dabei hat es sich gezeigt, daß beim Abtragen des Paraffins, der sog. "Deparaffinierung", die behandelten, polierten Stellen auf der Lackoberfläche nach außen nicht mehr sichtbar sind. Auch nach der anschließenden Trocknung des Lackes waren die manuell polierten Stellen nicht mehr sichtbar.

Das Mittel gemäß der Erfindung weist ferner wesentliche Vorteile auf, die sich insbesondere in der Auto- und Flugzeugindustrie sowie beim Schiffs- und Bootsbau auswirken.

Es hat sich gezeigt, daß bei Anwendung des Mittels gemäß der Erfindung in vielen Fällen eine nachträgliche Konservierung überhaupt entfallen kann. Bei Zusatz des Aminopolysiloxan zeigt sich sogar eine Langzeitwirkung des Mittels, so daß Fahrzeuge, beispielsweise ohne weitere Behandlung, längere Zeit auf Halden gelagert werden können, ohne daß eine Beeinträchtigung der Karosserieoberfläche eintritt. Ferner können derartig behandelte Fahrzeuge auch nach Übersee verfrachtet werden, ohne daß eine zusätzliche Konservierung erfolgt.

Die während der Lagerzeit sich auf der Außenfläche der Karosserie bildende Schmutzschicht kann mit einfachen Mitteln, beispielsweise durch Entstauben oder Waschen, entfernt werden. Dabei hat es sich gezeigt, daß die Oberfläche der Karosserie, insbesondere die Lackoberfläche, einwandfrei geschützt blieb.

Das Mittel zeichnet sich ferner dadurch aus, daß es sehr umweltfreundlich ist und zu fast 100 % biologisch abbaubar ist. Aus diesem Grunde bestehen gegen den Einsatz des Mittels unter Berücksichtigung des Natur- und Umweltschutzes keine Bedenken.

Bei Flugzeugen hat es sich gezeigt, daß die äußeren Rumpfflächen einen geringeren Gleitwiderstand aufweisen, so daß die Luftströmung wesentlich besser über die Oberfläche gleitet, wodurch sich Treibstoffeinsparungen im Flugverkehr ergeben.

Als besonderes Beispiel des Mittels gemäß der Erfindung wird folgende Zusammensetzung angegeben:

| | |
|---|---|
| 12 % | Paraffinkohlenwasserstoff, insbesondere entaromatisiertes Petroleum, |
| 1 % | Aniontensid, insbesondere eines gesättigten, natürlichen oder synthetischen $C_{12}C_{14}$-Fettalkohols, |
| 0,3 % | Emulgator, insbesondere eines nichtionischen Triethanolamin-Monoölsäureester, |
| 0,005 % | Konservierungsmittel, insbesondere eines Chlormethyl-Methylisothiazolon, |
| 0,005 % | Stabilisator in Form einer organischen Säure, insbesondere Äthansäure, |
| 1 % | Siliconöl, insbesondere Aminopolysiloxan, gelöst in Testbenzin und Isopropanol, |
| 0,50 % | Isopropanol, |
| Rest auf Einhundert demineralisiertes Wasser. | |

Selbstverständlich können der Stabilisator und das Siliconöl wegfallen und durch das demineralisierte Wasser ersetzt werden, wenn keine Langzeitwirkung gewünscht wird. Außerdem kann auch das Aniontensid durch ein Kationtensid ersetzt werden.

Bei sämtlichen Prozentangaben handelt es sich um Gewichtsprozente.

## Ansprüche

1. Reinigungs-, Polier- und Schutzmittel für Lacke, Glas, Kunststoffe, Chrom und Gummi an Karosserien von Fahrzeugen, Flugzeugen sowie Schiffen und Booten, **gekennzeichnet durch** folgende Zusammensetzung:

| | | | |
|---|---|---|---|
| 5,00 % | bis | 25,00 % | paraffinische und/oder naphtenische Kohlenwasserstoffe, insbesondere Petroleum, entaromatisiert, |
| 0,50 % | bis | 5,00 % | Aniontensid, insbesondere eines gesättigten, natürlichen oder synthetischen $C_{12}C_{14}$-Fettalkohols, |
| 0,20 % | bis | 1,00 % | Emulgator, insbesondere eines nichtionischen Triethanolamin-Monoölsäureester |
| 0,005 % | bis | 0,01 % | Konservierungsmittel, insbesondere eines Chlormethyl-Methylisothiazolon, |
| 0,004 % | bis | 0,01 % | Stabilisator in Form einer organischen Säure, insbesondere Äthansäure, |
| 0,05 % | bis | 3,00 % | Siliconöl, insbesondere Aminopolysiloxan, gelöst in Testbenzin und Isopropanol, |
| 0,50 % | bis | 15,00 % | Isopropanol, |
| Rest auf Einhundert demineralisiertes Wasser. | | | |

2. Reinigungs-, Polier- und Schutzmittel nach Anspruch 1, **gekennzeichnet durch** folgende Zusammensetzung:

6

| | | | |
|---|---|---|---|
| 5,00 % | bis | 25,00 % | paraffinische und/oder naphtenische Kohlenwasserstoffe, insbesondere Petroleum, entaromatisiert, |
| 0,50 % | bis | 5,00 % | Aniontensid, insbesondere eines gesättigten, natürlichen oder synthetischen $C_{12}C_{14}$-Fettalkohols, |
| 0,10 % | bis | 2,00 % | Lösungsvermittler, insbesondere Methylamylenglykol, |
| 0,20 % | bis | 1,00 % | Emulgator, insbesondere eines Triethanolamin-Monoölsäureester, |
| 0,005 % | bis | 0,01 % | Konservierungsmittel, insbesondere eines Chlormethyl-Methylisothiazolon, |
| 0,50 % | bis | 15,00 % | Isopropanol, |
| Rest auf Einhundert demineralisiertes Wasser. | | | |

3. Reinigungs-, Polier und Schutzmittel nach Anspruch 1, **gekennzeichnet durch** folgende Zusammensetzung:

| | | | |
|---|---|---|---|
| 0,50 % | bis | 2,00 % | Kationtensid, insbesondere ein quaternäres Fettamin, |
| 5,00 % | bis | 25,00 % | paraffinische und/oder naphtenische Kohlenwasserstoffe, insbesondere Petroleum, entaromatisiert, |
| 0,50 % | bis | 1,00 % | Äthansäure oder eine andere organische Säure, |
| 0,05 % | bis | 3,00 % | Siliconöl, insbesondere Aminopolysiloxan, gelöst in Testbenzin und Isopropanol, |
| 0,10 % | bis | 1,00 % | Emulgator, insbesondere eines Lauryl-/Myristylalkohol-Ethylenoxid-Addukt, |
| 0,005 % | bis | 0,01 % | Konservierungsmittel, insbesondere eines Chlormethyl-Methylisothiazolon, |
| 0,10 % | bis | 0,50 % | Antistatikum, insbesondere eines Kokospentaethoxymethylammoniummethosulfat, |
| 0,50 % | bis | 15,00 % | Isopropanol, |
| Rest auf Einhundert demineralisiertes Wasser. | | | |

4. Verfahren zur Anwendung des Mittels gemäß Anspruch 1, 2 oder 3, **dadurch gekennzeichnet,** daß es manuell oder maschinell auf die gesamte Oberfläche des Fahrzeuges aufgetragen bzw. aufgedüst und anschließend wiederum manuell oder maschinell trockenpoliert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 592 934 (R.L. WOLSTONCROFT) <br> * Ansprüche 1-8; Spalten 7-8, Beispiel I * <br> --- | 1,4 | C 09 G 1/16 <br> C 11 D 3/18 <br> C 11 D 3/37 |
| A | US-A-4 398 953 (W.B. VAN DER LINDE) <br> * Ansprüche 1,2 * <br> --- | 1,4 | |
| A | DE-A-3 327 926 (COLLO) <br> * Ansprüche 1-9 * <br> --- | 1 | |
| A | DE-A-2 815 905 (D. GROTH) <br> * Anspruch * <br> ----- | | |

RECHERCHIERTE SACHGEBIETE (Int. Cl.5)

C 09 G
C 11 D

Der vorliegende Recherchenbericht wurde für alle Patentansprüche erstellt

| Recherchenort | Abschlußdatum der Recherche | Prüfer |
|---|---|---|
| DEN HAAG | 05-09-1989 | GIRARD Y.A. |